# EUROPÄISCHE PATENTANMELDUNG

(11) **EP 4 552 999 A1**
(43) Veröffentlichungstag der Anmeldung: **14.05.2025**
(21) Anmeldenummer: 23208752.8
(22) Anmeldetag: 09.11.2023
(51) Int. Cl.: B65D 83/06, G01F 11/26, A01C 23/04

(54) **VERFAHREN ZUM BILDEN EINER PFLANZENNÄHRLÖSUNG UND DOSIERBEHÄLTER HIERFÜR**

(71) Anmelder: Hauert HBG Dünger AG, 3257 Grossaffoltern (CH)
(72) Erfinder: HAERT, Philipp, 3011 Bern (CH); BÜSCHER, Christoph Peter, 51674 WIEHL (DE)
(74) Vertreter: Wunderlich & Heim Patentanwälte PartG mbB

(57) **Zusammenfassung**

Die Erfindung betrifft ein Verfahren und Dosierbehälter zum Bilden einer Pflanzennährlösung zum Düngen, insbesondere für Pflanzen in Haus und Garten, wobei pulverförmige Düngerkomponenten in einem Behälter bevorratet und einer Trägerflüssigkeit zugegeben werden, wobei als Behälter ein geschlossener Dosierbehälter (20) mit einer Ausgabeöffnung (22) an einer Kopfseite des Dosierbehälters verwendet wird, wobei in dem Dosierbehälter ein Aufnahmenapf (24) mit einer Aufnahmeöffnung (26), welche zur Ausgabeöffnung des Dosierbehälters gerichtet ist, und ein Dosierrohr angeordnet sind, welches sich von der Ausgabeöffnung bis in den Bereich des Aufnahmenapfes hinein erstreckt, wobei zum Abgeben einer Dosiermenge an pulverförmigen Düngerkomponenten der Aufnahmenapf mit einer Menge an pulverförmigen Düngerkomponenten gefüllt wird, insbesondere durch Umdrehen des Dosierbehälters von der Kopfseite zu einer Fußseite und zurück, und der Dosierbehälter, nachdem der Aufnahmenapf gefüllt ist, von der Kopfseite zur Fußseite gedreht wird, wobei über das Dosierrohr gezielt eine Dosiermenge an pulverförmigen Düngerkomponenten von dem Aufnahmenapf über die nach unten gerichtete Ausgabeöffnung, insbesondere direkt in die Trägerflüssigkeit, ausgegeben wird.

## Beschreibung

Die Erfindung betrifft ein Verfahren zum Bilden einer Pflanzennährlösung, insbesondere für Pflanzen in Haus und Garten, wobei pulverförmige Düngerkomponenten, insbesondere pulverförmige Nährsalze, in einem Behälter bevorratet werden. Die pulverförmigen Düngerkomponenten werden einer Trägerflüssigkeit zugegeben, wobei die Pflanzennährlösung zum Düngen gebildet wird, gemäß dem Oberbegriff des Anspruchs 1.

Die Erfindung betrifft weiterhin einen Dosierbehälter zum Aufnehmen von pulverförmigen Düngerkomponenten, insbesondere pulverförmigen Nährsalzen, und zum gezielten Ausgeben einer Dosiermenge hiervon, insbesondere zum Bilden einer Pflanzennährlösung, insbesondere für Pflanzen in Haus und Garten, gemäß dem Oberbegriff des Anspruch 5.

Planzennährlösungen sorgen bei Grünpflanzen für ein kräftiges Wachstum und eine intensive Farbgebung. Zusätzlich wird die Widerstandsfähigkeit gegen Krankheiten und Schädlinge erhöht. Es ist bekannt, derartige Planzennährlösungen durch Zugabe eines Flüssigdüngers oder von Düngersalzen in ein Gießwasser zu bilden.

Gattungsgemäße Verfahren zum Bilden von Pflanzennährlösungen sind seit langem bekannt. Mit solchen Verfahren können beispielsweise Pflanzennährlösungen aus leicht löslichen Düngersalzen für ein verbessertes Pflanzenwachstum bei Haus- und Gartenpflanzen einfach hergestellt werden. Üblicherweise wird zum Herstellen der Pflanzennährlösung eine bestimmte Menge eines pulverförmigen Düngemittels in Wasser gelöst. Bei diesem Verfahrensschritt ist die richtige Dosierung des Düngemittels ausschlaggebend. Dies erfolgt häufig mit einem Messlöffel aus einem dosenartigen Behälter mit einer relativ großen Entnahmeöffnung. Eine Dosierung mit einem Messlöffel ist bei Anwendungen im Haus- und Hobbybereich fehleranfällig. Über- oder Unterdosierungen können zu Pflanzenschäden führen.

Zudem bedeutet eine große Entnahmeöffnung an einem dosenartigen Behälter stets eine große Kontaktfläche der Düngersalze mit Umgebungsluft und darin enthaltener Luftfeuchtigkeit. Dies kann zu einem unerwünschten Verkrusten und Agglomerieren der leicht löslichen Salze führen. Über eine längere Zeit wird hierdurch die Dosierbarkeit und eine schnelle Lösbarkeit des Düngerproduktes beeinträchtigt. Im Extremfall wird das Düngerprodukt für den Anwender unbrauchbar.

Gegenüber Flüssigdüngern besteht der Vorteil einer kompakteren und einfacheren Lagerung und damit einer vereinfachten Transportierbarkeit. Der Erfindung liegt die **Aufgabe** zugrunde, ein Verfahren und einen Dosierbehälter anzugeben, mit welchen eine Handhabung von pulverförmigen Düngerkomponenten zum Bilden einer Pflanzennährlösung zum Düngen vereinfacht und zugleich die Langlebigkeit des Düngerproduktes erhöht werden.

Die Aufgabe wird nach der Erfindung zum einen durch ein Verfahren zum Bilden einer Pflanzennährlösung mit den Merkmalen des Anspruchs 1 und zum anderen durch einen Dosierbehälter mit den Merkmalen des Anspruchs 5 gelöst. Bevorzugte Ausführungsformen der Erfindung sind in den abhängigen Ansprüchen angegeben.

Das erfindungsgemäße Verfahren zum Bilden einer Pflanzennährlösung ist dadurch gekennzeichnet, dass als Behälter ein geschlossener Dosierbehälter mit einer Ausgabeöffnung an einer Kopfseite des Dosierbehälters verwendet wird, wobei in dem Dosierbehälter ein Aufnahmenapf mit einer Aufnahmeöffnung, welche zur Ausgabeöffnung des Dosierbehälters gerichtet ist, und ein Dosierrohr angeordnet sind, welche sich von der Ausgabeöffnung bis in den Bereich des Aufnahmenapfes hinein erstreckt, dass zum Abgeben einer Dosiermenge an pulverförmigen Düngerkomponenten der Aufnahmenapf mit einer Menge an pulverförmigen Düngerkomponenten gefüllt wird, insbesondre durch Umdrehen des Dosierbehälters von der Kopfseite zu einer Fußseite und zurück, und dass der Dosierbehälter, nachdem der Aufnahmenapf gefüllt ist, von der Kopfseite zur Fußseite gedreht wird, wobei über das Dosierrohr gezielt eine Dosiermenge an pulverförmigen Düngerkomponenten von dem Aufnahmenapf über die nach unten gerichtete Ausgabeöffnung, insbesondere direkt in die Trägerflüssigkeit, ausgegeben wird.

Eine Grundidee der Erfindung liegt darin, das Dosieren von pulverförmigen Düngerkomponenten zum Bilden einer Pflanzennährlösung durch einfache Drehbewegungen eines speziell ausgestalteten Dosierbehälters durchzuführen. Der Dosierbehälter, welcher insbesondere von einer Hand einer Anwenderperson gegriffen werden kann, weist dabei einen inneren Aufnahmenapf mit einer Aufnahmeöffnung auf, der durch eine erste Drehbewegung mit einer bestimmten Dosiermenge an pulverförmigen Düngerkomponenten gefüllt wird. Durch eine zweite Drehbewegung gelangt ebendiese Menge an pulverförmigen Düngerkomponenten in ein Dosierrohr und wird von dort über eine nach unten gerichtete Ausgabeöffnung, insbesondere direkt an ein Gießwasser, ausgegeben. So wird sozusagen im Handumdrehen ein einfaches und effizientes Dosieren von Düngerkomponenten zum Bilden einer Pflanzennährlösung zum Düngen sichergestellt. Insbesondere das Düngen von Pflanzen in Haus und Garten wird durch das hier beschriebene Verfahren deutlich vereinfacht. Eine je Abgabeumdrehung ausgegebene Dosiermenge kann beispielsweise für eine Menge an Trägerflüssigkeit (Gießwasser) von 0,5l oder 1l ausgelegt sein. Andere Vorgaben sind ohne weiteres durch Anpassen insbesondere des Aufnahmenapfes und/oder des Dosierrohres möglich.

Durch die erfindungsgemäße Gestaltung des Dosierbehälters wird ein Zutritt von Umgebungsluft in das Behälterinnere erheblich begrenzt. Die Düngerkomponenten sind so vor Einwirkungen durch die Luftfeuchtigkeit besser geschützt. Sie bleiben länger rieselfähig und leicht lösbar. Dies erhöht den Nutzzweck und die Langlebigkeit des Düngerproduktes. Zudem sorgt die nutzungsbedingte Drehbewegung für ein häufiges Durchmischen der Düngerkomponenten, was einer unerwünschten Ausbildung von Verkrustungen und Verfestigungen entgegenwirkt.

Grundsätzlich kann der Aufnahmenapf mit einer beliebigen Menge an Düngemittel gefüllt werden, wobei das Düngemittel verschiedene Düngersalze, insbesondere NPK-Dünger, Stickstoffvariationen, wie beispielsweise Nitratstickstoff, Gesamtstickstoff, Phosphat, wasserlösliches Kaliumoxid, wasserlösliches Bor, wasserlösliches Kupfer, wasserlösliches Eisen, wasserlösliches Mangan und wasserlösliches Zink aufweisen kann.

Eine bevorzugte Ausführungsform der Erfindung besteht darin, dass der Aufnahmenapf mit einer solchen Menge an pulverförmigen Düngerkomponenten befüllt wird, dass ein unteres Ende des Dosierrohres in die Menge an pulverförmigen Düngerkomponenten eingetaucht ist und ein freier Durchgang von Luft von dem Dosierrohr in den Dosierbehälter blockiert wird. Dadurch wird ein Zutritt von Luftfeuchtigkeit zu den Pflanzennährstoffe in dem Behälter weitergehend behindert. Auch einem ungewollten Eindringen von Fremdkörpern wird entgegengewirkt.

Eine weitere vorteilhafte Ausgestaltung der Erfindung besteht darin, dass die pulverförmigen Düngerkomponenten beim Ausgeben gesiebt werden. Dazu kann beispielsweise ein Sieb vorgesehen sein, welches in dem Dosierrohr oder an den äußeren Enden des Dosierrohres angeordnet ist. Somit lassen sich mehrere Vorteile erzielen: Zum einen wird das Eindringen von Fremdkörpern bestimmter Größe aus dem Außenbereich in das Dosierrohr vermieden und zum anderen kann eine gleichmäßigere Ausgabe der Düngerkomponenten aus dem Dosierrohr erreicht werden. Ebenso ist es möglich, dass bestimmte Teile der pulverförmigen Düngerkomponenten zurückgehalten werden.

In einer bevorzugten Ausführungsform ist es vorgesehen, dass in dem Dosierbehälter, insbesondere in einem oberen Bereich des Dosierbehälters getrennt von den Düngerkomponenten, ein Mittel mit hydrophiler Eigenschaft angeordnet wird. Dadurch wird in dem Dosierbehälter Feuchtigkeit gebunden. Es kann hierfür beispielsweise Silikat oder ein Silikatkompositstoff verwendet werden. Die Anordnung kann an jeder geeigneten Stelle in dem Dosierbehälter erfolgen, etwa auch an dem Dosierrohr oder dem Aufnahmenapf. Das Mittel kann vorzugsweise an mindestens einer Seitenwand des Dosierbehälters, etwa als Silikatgel oder als Silikatbehältnis, angebracht sein und als hydrophile Abfangvorrichtung wirken. Dadurch wird einem Durchfeuchten und damit Verkrusten der pulverförmigen Düngerkomponenten entgegengewirkt.

Die Erfindung umfasst weiter einen Dosierbehälter zum Aufnehmen von pulverförmigen Düngerkomponenten, welcher dadurch gekennzeichnet ist, dass der Behälter als ein geschlossener Dosierbehälter mit einer Ausgabeöffnung an einer Kopfseite des Dosierbehälters ausgebildet ist, dass in dem Dosierbehälter ein Aufnahmenapf zum Aufnehmen einer Teilmenge an Düngerkomponenten mit einer Aufnahmeöffnung ausgebildet ist, welche zur Ausgabeöffnung des Dosierbehälters gerichtet ist, und dass in den Dosierbehälter weiter ein Dosierrohr angeordnet ist, welches sich von der Ausgabeöffnung bis in den Bereich des Aufnahmenapfes hinein erstreckt, und dass der Aufnahmenapf und das Dosierrohr derart zueinander angeordnet sind, dass der Aufnahmenapf durch Drehen des Dosierbehälters von der Kopfseite zu einer Fußseite und zurück mit einer Menge an pulverförmigen Düngerkomponenten befüllbar ist, und dass durch Umdrehen des Dosierbehälters von der Kopfseite zur Fußseite über das Dosierrohr gezielt eine Dosiermenge an pulverförmigen Düngerkomponenten von dem Aufnahmenapf über die nach unten gerichtete Ausgabeöffnung ausgebbar ist.

Mit dem Dosierbehälter kann insbesondere das zuvor dargelegte erfindungsgemäße Verfahren ausgeführt werden. Es werden die zuvor beschriebenen Vorteile mit dem Dosierbehälter erreicht.

Es kann dabei vorteilhaft sein, wenn der Aufnahmenapf zylindrisch und in einer sich zur Fußseite verjüngender Form ausgebildet ist, da die pulverförmigen Düngerkomponenten so gezielter in das Dosierrohr gelangen. Mit dieser Vorrichtung kann das Dosieren von Düngerkomponenten beim Bilden einer Pflanzennährlösung zum Düngen präzisiert und vereinfacht werden. Ein Vorteil hiervon ist, dass Verbraucher so durch einfache Kippbewegungen die Düngerkomponenten dosieren können und beispielsweise einer bestimmten Menge Wasser oder direkt den Pflanzen zugeben können.

Besonders bevorzugt ist es dabei, dass an dem Dosierrohr ein Verschlussdeckel zum Verschließen des Dosierrohres angeordnet ist. So kann ein ungewolltes Austreten der pulverförmigen Düngerkomponenten verhindert werden. Auch können so weder Luftfeuchtigkeit noch unerwünschte Fremdkörper in den Dosierbehälter gelangen. Vorteilhaft ist es dabei auch, wenn der Verschlussdeckel zum Halten eines Überdrucks ausgebildet ist.

Der Verschlussdeckel kann auf vielfältige Weise ausgebildet sein. Eine Ausführungsform der Erfindung besteht in diesem Zusammenhang darin, dass der Verschlussdeckel schwenkbar zwischen einer Verschlussposition und einer Ausgabeposition gelagert ist, wobei sich der Verschlussdeckel in seiner Verschlussposition befindet, wenn die Ausgabeöffnung nach oben gerichtet ist, und sich der Verschlussdeckel in der Ausgabeposition befindet, wenn die Ausgabeöffnung nach unten gerichtet ist. Hierdurch wird die Handhabung des Dosierbehälters vereinfacht und ein vollständiges Entleeren des Aufnahmenapfes durch das Dosierrohr sichergestellt.

Alternativ oder ergänzend dazu kann es nach einer Weiterbildung der Erfindung vorteilhaft sein, dass das Dosierrohr in einen Mittenbereich des Aufnahmenapfes hineinreicht, wobei zwischen dem mittigen Dosierrohr und einer umgebenden Wand des Aufnahmenapfes ein ringförmiger Durchgangsspalt zum Befüllen des Aufnahmenapfes gebildet ist. Dadurch wird sichergestellt, dass beim Drehen des Dosierbehälters von der Kopfseite zur Fußseite und zurück die pulverförmigen Düngerkomponenten in den Aufnahmenapf gelangen. Der ringförmige Durchgangsspalt kann dabei von mindestens einer Querverstrebung durchsetzt sein.

Alternativ kann das Dosierrohr auch in einen Seitenbereich des Aufnahmenapfes hineinreichen. Als besonders vorteilhaft hat es sich dabei herausgestellt, dass sich das Dosierrohr im unteren Bereich kegelförmig verbreitert. Damit wird sichergestellt, dass die Dosiermenge an pulverförmigen Düngerkomponenten beim Umdrehen des Dosierbehälters vollständig in das Dosierrohr gelangt. Ferner kann das Dosierrohr mit der Unterseite des Aufnahmenapfes an ein oder mehreren Stellen in Verbindung stehen. Je nach der Position des Dosierrohrs kann sich der Aufnahmenapf entweder mittig unterhalb der Ausgabeöffnung freischwebend befinden oder fest an einer Seitenwand des Dosierbehälters installiert sein.

Eine weitere vorteilhafte Ausgestaltung der Erfindung besteht darin, dass das Dosierrohr an einem Behälterdeckel ausgebildet ist, welcher auf die Ausgabeöffnung des Dosierbehälters aufgebracht, insbesondere aufgeschraubt ist. Damit kann der Dosierbehälter auf unkomplizierte Art und Weise wieder befüllt und es kann ein herkömmlicher Behälter verwendet werden. Der Behälterdeckel kann als ein Dosierkopf ausgebildet sein.

Grundsätzlich können der Aufnahmenapf und das Dosierrohr getrennt hergestellt sein, welche anschließend verbunden werden. In einer bevorzugten Ausführungsform ist es vorgesehen, dass der Aufnahmenapf und der Behälterdeckel mit dem Dosierrohr zusammen als eine Dosiereinheit, insbesondere einstückig, ausgebildet sind. Besonders vorteilhaft ist es dabei, wenn das zylindrische Dosierrohr aus der Ebene des Behälterdeckels nach oben vertikal herausragt. Damit wird ein Einfüllen der aus dem Dosierrohr austretenden Dosiermenge in einen anderen Behälter, beispielsweise zur Weiterverarbeitung, erleichtert. Das Dosierrohr kann dabei nach oben spitz zulaufen. Ein Vorteil der Dosiereinheit besteht beispielsweise darin, dass zu Kontrollzwecken der Aufnahmenapf, der Behälterdeckel und das Dosierrohr als zusammengehörige Einheit aus dem Dosierbehälter entnommen werden können.

Besonders bevorzugt ist es, dass der Aufnahmenapf mit dem Dosierrohr über mindestens einen Steg verbunden ist. Der mindestens eine Steg kann beispielsweise schräg ausgebildet sein, und das Innenrohr mit dem Aufnahmenapf verbinden. Alternativ oder ergänzend dazu kann der mindestens eine Steg in horizontaler, vertikaler oder schräger Lage ausgebildet sein. Denkbar ist auch, dass der Steg als ein mit Löchern durchsetzter Abdichtungsring zwischen dem Innenrohr und einer Innenwand des Aufnahmenapfes ausgebildet ist. Durch den mindestens einen Steg kann der Aufnahmenapf in vorteilhafter Weise freischwebend unterhalb der Aufnahmeöffnung gelagert sein.

Eine weitere vorteilhafte Ausgestaltung der Erfindung besteht darin, dass das Dosierrohr ein Sieb aufweist, welches von den Düngerkomponenten beim Drehen des gefüllten Aufnahmenapfes durchlaufen wird und welches nur von Partikeln der Düngerkomponente bis zu einer vorgegebenen Größe passierbar ist. Alternativ oder ergänzend dazu kann auch eine Filtereinrichtung in dem genannten Dosierrohr vorgesehen sein, durch welche auf vorteilhafte Weise Fremdkörper abgehalten werden. Das genannte Sieb kann in kreisrunder Form ausgebildet sein und quadratische Maschenöffnungen zum Filtern von Partikeln mit einer bestimmten Größe aufweisen. Ein wesentlicher Vorteil dieser Ausgestaltung ist, dass die pulverförmigen Düngerkomponenten beim Umdrehen des Dosierbehälters gleichmäßig aus dem Dosierrohr ausströmen und zusätzlich aufgrund ihrer Größe ungeeignete Partikel sowie Fremdkörper gefiltert werden.

Nach einer Weiterbildung der Erfindung kann es vorteilhaft sein, dass in dem Dosierbehälter ein Mittel mit hydrophiler Eigenschaft, insbesondre ein Silikat, angeordnet ist. Dabei sind verschiedene Möglichkeiten vorgesehen. Beispielsweise kann ein Silikatgel gleichmäßig über die Innenseiten des Dosierbehälters verteilt sein. Alternativ dazu können auch Silikatbehältnisse vorgesehen sein, die an den Innenseiten des Dosierbehälters angeordnet sind. Durch die hydrophilen Eigenschaften kann ein Durchfeuchten der pulverförmigen Düngerkomponenten vermieden werden. Somit wird beispielsweise die Langlebigkeit des Produktes erhöht.

Der Dosierbehälter kann grundsätzlich verschiedenartig geformt sein. Eine besonders vorteilhafte Ausführungsform besteht darin, dass sich der Dosierbehälter in Richtung der Kopfseite, insbesondere im Bereich der Ausgabeöffnung verjüngt. Dadurch wird beispielsweise die Handhabung, insbesondre die Installation der Dosiereinheit, vereinfacht. Der Dosierbehälter kann einen Handgriff zur besseren Handhabung durch eine Person aufweisen. Das Füllvolumen beträgt vorzugsweise bis zu 2l.

Besonders bevorzugt ist es gemäß der Erfindung, dass der Behälterdeckel mit dem Dosierbehälter mit einer Steckverbindung oder einer Schraubverbindung verbunden ist. Die Steckverbindung kann dabei mittels einem oder mehreren hervorstehenden Stegen verwirklicht sein. Eine so ausgebildete Verbindung des Behälterdeckels mit dem Dosierbehälter ermöglicht ein einfaches Befüllen des Dosierbehälters im Herstellungsprozess. Zusätzlich kann so der Füllstand des Aufnahmenapfes überprüft werden.

Die Erfindung wird nachfolgend anhand eines bevorzugten Ausführungsbeispieles näher erläutert, das schematisch in der Zeichnung dargestellt ist.

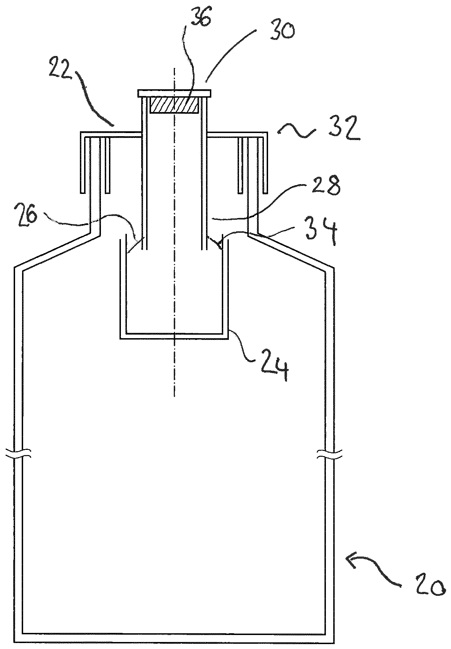

- Fig. 1: zeigt einen Querschnitt des in dem erfindungsgemäßen Verfahren verwendeten Behälters zum Bilden einer Pflanzenlösung.

Fig. 1 zeigt eine schematische Querschnittsansicht eines Dosierbehälters 20, wobei die Schnittebene die beiden Behälterwände sowie eine Dosiereinheit mittig und vertikal durchtrennt. Der Behälter hat eine zylindrische Grundform, die sich nach oben verjüngt. Die Grundform kann dabei in beliebiger Form, insbesondere auch in rechteckiger Form, ausgebildet sein. Durch die hier gezeigte Form können sich die pulverförmigen Düngekomponenten, die sich in dem Dosierbehälter 20 befinden, durch eine Drehbewegung konzentriert in einem Bereich an einer geschlossenen Ausgabeöffnung 22 sammeln. Bei einer erneuten Drehbewegung gelangt eine bestimmte Dosis von pulverförmigen Düngekomponenten gezielt in einen Aufnahmenapf 24 der Dosiereinheit. Durch eine weitere Drehbewegung werden die pulverförmigen Düngekomponenten aus dem Aufnahmenapf 24 durch ein Dosierrohr 28 an die Umgebung, insbesondere in eine Trägerflüssigkeit zum Bilden einer Pflanzennährstofflösung abgegeben.

Grundsätzlich können der Aufnahmenapf 24 und der Dosierbehälter 20 jede Form aufweisen, die sich unter den Gesichtspunkten der Handhabung, Lagerung oder Befüllung, insbesondere zur Befüllung des Aufnahmenapfes 24 als vorteilhaft erweist. Ein Befüllen des Dosierbehälter 20 kann vorzugsweise über die Ausgabeöffnung 22, aber grundsätzlich auch über eine separate Öffnung am Bodenbereich an der Fußseite erfolgen. Der Dosierbehälter 20 kann insbesondere aus einem transparenten, also lichtdurchlässigen Material gebildet sein. Im Bereich des Grundkörpers des Dosierbehälters 20 kann eine Volumenskala vorgesehen sein, mittels welcher der Verwender des Dosierbehälter 20 das vorhandene Volumen an pulverförmigen Düngekomponenten in dem Dosierbehälter 20 ablesen kann. Damit ist es dem Verwender ermöglicht, das exakt abgegebene Volumen von Düngemittel zu bestimmen.

Zum Erhöhen des Innendrucks in dem Dosierbehälter 20 und zum Auflösen von Verfestigungen der pulverförmigen Düngekomponenten kann zumindest eine der Behälterwände verformt werden. Besonders bevorzugt werden die zwei gegenüberliegenden Dosierbehälterwände, insbesondere durch einen Handdruck, einander gegenseitig zugeführt, was eine definierte Erhöhung des Innendrucks bewirkt. Der Dosierbehälter 20, insbesondere die Dosierbehälterwände können aus einem flexiblen Material gebildet sein und beim Zusammendrücken eine Rückstellkraft erzeugen, die die Dosierbehälterwand in Richtung ihrer ursprünglichen Ausrichtung elastisch zurückführt, sobald der Druck auf die Dosierbehälterwand nicht mehr einwirkt.

In Fig 1 wird im oberen Bereich die Dosiereinheit bestehend aus dem Aufnahmenapf 24, einem Behälterdeckel 32 und einem Dosierrohr 28 gezeigt. Der Behälterdeckel 32 kann durch zwei parallel verlaufende Stege auf den Dosierbehälter 20 gesteckt sein. Das Dosierrohr 28 ragt dabei zum gezielteren Ausgeben der pulverförmigen Düngerkomponenten vertikal aus dem Behälterdeckel hervor. Alternativ kann das Dosierrohr 28, insbesondere im oberen Teil, auch bezüglich der vertikalen Achse geneigt angeordnet sein und mehrere Teilrohre aufweisen.

Die Dosiereinheit und der Dosierbehälter 20 können grundsätzlich aus verschiedenen Materialien gefertigt werden. Bevorzugt werden dabei vor allem Kunststoffe, organische Materialien und Metall eingesetzt. Die Dosiereinheit kann sich dabei hinsichtlich der Materialzusammensetzung von dem restlichen Dosierbehälter 20 unterscheiden.

Gemäß Fig. 1 durschneidet das Dosierrohr 28 den geschlossenen Verschlussdeckel 30 und verbindet so den Außenbereich des Dosierbehälters 20 mit dem Aufnahmenapf 24. Der Aufnahmenapf 24 wird dabei über zwei im Seitenbereich des Dosierrohres 28 angeordnete Stege 34, die das Dosierrohr 28 mit dem Aufnahmenapf 24 verbinden, von dem Dosierrohr 28 in einer horizontalen Position gehalten. Am Ausgang des Dosierrohrs 28 kann ein Sieb 36 und ein schwenkbarer Verschlussdeckel 30 zum Verschließen des Dosierrohres 28 ausgebildet sein. Der Verschlussdeckel 30 kann dabei ebenso wie der Behälterdeckel 32 mit dem Dosierbehälter 20 mittels eines Steck- oder eines Drehverschlusses lösbar mit dem Dosierrohr 28 verbunden sein.

## Patentansprüche

1. Verfahren zum Bilden einer Pflanzennährlösung, insbesondere für Pflanzen in Haus und Garten, wobei
- pulverförmige Düngerkomponenten, insbesondere pulverförmige Nährsalze, in einem Behälter bevorratet werden und
- die pulverförmigen Düngerkomponenten einer Trägerflüssigkeit zugegeben werden, wobei die Pflanzennährlösung zum Düngen gebildet wird,
**dadurch gekennzeichnet,**
- **dass** als Behälter ein geschlossener Dosierbehälter (20) mit einer Ausgabeöffnung (22) an einer Kopfseite des Dosierbehälters (20) verwendet wird, wobei in dem Dosierbehälter (20)
-- ein Aufnahmenapf (24) mit einer Aufnahmeöffnung (26), welche zur Ausgabeöffnung (22) des Dosierbehälters gerichtet ist, und
-- ein Dosierrohr (28) angeordnet sind, welches sich von der Ausgabeöffnung (22) bis in den Bereich des Aufnahmenapfes (24) hinein erstreckt,
- **dass** zum Abgeben einer Dosiermenge an pulverförmigen Düngerkomponenten der Aufnahmenapf (24) mit einer Menge an pulverförmigen Düngerkomponenten gefüllt wird, insbesondere durch Umdrehen des Dosierbehälters (20) von der Kopfseite zu einer Fußseite und zurück, und
- **dass** der Dosierbehälter (20), nachdem der Aufnahmenapf (24) gefüllt ist, von der Kopfseite zur Fußseite gedreht wird, wobei über das Dosierrohr (28) gezielt eine Dosiermenge an pulverförmigen Düngerkomponenten von dem Aufnahmenapf (24) über die nach unten gerichtete Ausgabeöffnung (22), insbesondere direkt in die Trägerflüssigkeit, ausgegeben wird.

2. Verfahren nach Anspruch 1,
**dadurch gekennzeichnet,**
**dass** der Aufnahmenapf (24) mit einer solchen Menge an pulverförmigen Düngerkomponenten gefüllt wird, dass ein unteres Ende des Dosierrohres (28) in die Menge an pulverförmigen Düngerkomponenten eingetaucht ist und ein freier Durchgang von Luft von dem Dosierrohr (28) in den Dosierbehälter (20) blockiert wird.

3. Verfahren nach Anspruch 1 oder Anspruch 2,
**dadurch gekennzeichnet,**
**dass** die pulverförmigen Düngerkomponenten beim Ausgeben gesiebt werden.

4. Verfahren nach Anspruch 1 bis 3,
**dadurch gekennzeichnet,**
**dass** in dem Dosierbehälter (20) getrennt von den Düngerkomponenten, insbesondere in einem oberen Bereich des Dosierbehälters (20), ein Mittel mit hydrophilen Eigenschaften angeordnet wird, durch welches in dem Dosierbehälter (20) Feuchtigkeit gebunden wird.

5. Dosierbehälter (20) zum Aufnehmen von pulverförmigen Düngerkomponenten, insbesondere pulverförmigen Nährsalzen, und zum gezielten Ausgeben einer Dosiermenge hiervon, insbesondere zum Bilden einer Pflanzennährlösung, insbesondere für Pflanzen in Haus und Garten,
**dadurch gekennzeichnet,**
**dass** der Behälter als ein geschlossener Dosierbehälter (20) mit einer Ausgabeöffnung (22) an einer Kopfseite des Dosierbehälters (20) ausgebildet ist,
**dass** in dem Dosierbehälter ein Aufnahmenapf (24) zum Aufnehmen einer Teilmenge an Düngerkomponenten mit einer Aufnahmeöffnung (26) ausgebildet ist, welche zur Ausgabeöffnung (22) des Dosierbehälters (20) gerichtet ist, und dass in dem Dosierbehälter (20) weiter ein Dosierrohr (28) angeordnet ist, welches sich von der Ausgabeöffnung (22) bis in den Bereich des Aufnahmenapfes (24) hinein erstreckt,
**dass** der Aufnahmenapf (24) und das Dosierrohr (28) derart zueinander angeordnet sind, dass der Aufnahmenapf (24) durch Drehen des Dosierbehälters (20) von der Kopfseite zu einer Fußseite und zurück mit einer Menge an pulverförmigen Düngerkomponenten füllbar ist, und
**dass** durch Umdrehen des Dosierbehälters (20) von der Kopfseite zur Fußseite über das Dosierrohr (28) gezielt eine Dosiermenge an pulverförmigen Düngerkomponenten von dem Aufnahmenapf (24) über die nach unten gerichtete Ausgabeöffnung (22) ausgebbar ist.

6. Dosierbehälter nach Anspruch 5,
**dadurch gekennzeichnet,**
**dass** an dem Dosierrohr (28) ein Verschlussdeckel (30) zum Verschließen des Dosierrohres (28) angeordnet ist.

7. Dosierbehälter nach Anspruch 6,
**dadurch gekennzeichnet,**
**dass** der Verschlussdeckel (30) schwenkbar zwischen einer Verschlussposition und einer Ausgabeposition gelagert ist, wobei sich der Verschlussdeckel (30) in seiner Verschlussposition befindet, wenn die Ausgabeöffnung nach oben gerichtet ist, und sich der Verschlussdeckel (30) in der Ausgabeposition befindet, wenn die Ausgabeöffnung nach unten gerichtet ist.

8. Dosierbehälter nach einem der Ansprüche 5 bis 7,
**dadurch gekennzeichnet,**
**dass** das Dosierrohr (28) in einen Mittenbereich des Aufnahmenapfes (24) hineinreicht, wobei zwischen dem mittigen Dosierrohr (28) und einer umgebenden Wand des Aufnahmenapfes (24) ein ringförmiger Durchgangsspalt zum Befüllen des Aufnahmenapfes (24) gebildet ist.

9. Dosierbehälter nach einem der Ansprüche 5 bis 8,
**dadurch gekennzeichnet,**
**dass** das Dosierrohr (28) an einem Behälterdeckel (32) ausgebildet ist, welcher auf die Ausgabeöffnung (22) des Dosierbehälters (20) aufgebracht, insbesondere aufgeschraubt ist.

10. Dosierbehälter nach Anspruch 9,
**dadurch gekennzeichnet,**
**dass** der Aufnahmenapf (24) und der Behälterdeckel (32) mit dem Dosierrohr (28) zusammen als eine Dosiereinheit, insbesondere einstückig, ausgebildet sind.

11. Dosierbehälter nach Anspruch 5 bis 10,
**dadurch gekennzeichnet,**
**dass** der Aufnahmenapf (24) mit dem Dosierrohr (28) über mindestens einen Steg (34) verbunden ist.

12. Dosierbehälter nach Anspruch 5 bis 11,
**dadurch gekennzeichnet,**
**dass** das Dosierrohr (28) ein Sieb (36) aufweist, welches von den Düngerkomponenten beim Drehen des gefüllten Aufnahmenapfes (24) durchlaufen wird und welches nur von Partikeln der Düngerkomponente bis zu einer vorgegebenen Größe passierbar ist.

13. Dosierbehälter nach Anspruch 5 bis 12,
**dadurch gekennzeichnet,**
**dass** in dem Dosierbehälter (20) ein Mittel mit hydrophilen Eigenschaften, insbesondere ein Silikat, angeordnet ist.

14. Dosierbehälter nach Anspruch 5 bis 13,
**dadurch gekennzeichnet,**
**dass** sich der Dosierbehälter (20) in Richtung der Kopfseite, insbesondere im Bereich der Ausgabeöffnung (22), verjüngt.

15. Dosierbehälter nach Anspruch 5 bis 14,
**dadurch gekennzeichnet,**
**dass** der Behälterdeckel (32) mit dem Dosierbehälter (20) mit einer Steckverbindung oder einer Schraubverbindung verbunden ist.
